# EUROPEAN PATENT APPLICATION

(11) **EP 3 582 478 A1**
(43) Date of publication of application: **18.12.2019**
(21) Application number: 17898952.1
(22) Date of filing: 28.02.2017
(51) Int. Cl.: H04M 3/22, H04L 29/00, H04L 29/06, H04M 7/00, H04W 12/00

(54) **LAWFUL INTERCEPTION METHOD, DEVICE, AND SYSTEM**

(71) Applicant: Huawei Technologies Co., Ltd., Longgang District Shenzhen, Guangdong 518129 (CN)
(72) Inventor: CAO, Longyu, Shenzhen Guangdong 518129 (CN); XIA, Yuan, Shenzhen Guangdong 518129 (CN); SUN, Xiaodong, Shenzhen Guangdong 518129 (CN); ZHOU, Junping, Shenzhen Guangdong 518129 (CN)
(74) Representative: Epping - Hermann - Fischer
(86) International application number: PCT/CN2017/075279
(87) International publication number: WO 2018/157322

(57) **Abstract**

This application relates to the field of communications technologies, and discloses a lawful interception method, apparatus, and system, so as to resolve a problem that a lawful interception center cannot perform lawful interception on local offloaded service data of user equipment. The method includes: receiving, by a centralized gateway device, an interception instruction sent by a lawful interception gateway device, where the interception instruction carries an identifier of to-be-intercepted user equipment; sending, by the centralized gateway device to a remote gateway device, an offloading disabling instruction, where the offloading disabling instruction is used to instruct the remote gateway device to disable a local offloading function of the user equipment; and receiving, by the centralized gateway device, service data of the user equipment sent by the remote gateway device, and reporting the service data to a lawful interception center. This application is applicable to a process of performing lawful interception on user equipment.

## Description

### TECHNICAL FIELD

This application relates to the field of communications technologies, and in particular, to a lawful interception method, apparatus, and system.

### BACKGROUND

With development of communications technologies, user equipment (User Equipment, UE) imposes an increasingly high requirement on transmission efficiency of a communications network. In an actual network deployment, because a serving gateway (Serving Gateway, SGW), a packet data network gateway (Packet Data Network Gateway, PGW), and a mobility management entity (Mobility Management Entity, MME) are usually deployed in a provincial backbone network, and a deployment position is relatively high, and is relatively far away from user equipment, when the user equipment accesses a service through a wireless mobile network, a data transmission path is relatively long, a latency is relatively high, and user experience is poor. To resolve the foregoing problems, a gateway may be deployed at a position closer to the user equipment (for example, a metropolitan area network or base station position) in a distributed gateway deployment manner. In this way, if an application server is locally deployed, a distributed gateway can directly send local service data of the user equipment to the local server (Local APP, LAPP), thereby shortening a data transmission path of the user equipment, reducing a service access latency, and improving network transmission efficiency.

To ensure security of a network, performing lawful interception in the network is a common means. When lawful interception is performed on user equipment, a gateway device deployed in a provincial backbone network usually reports service data of the user equipment to a lawful interception center through a lawful interception gateway (Lawful Interception Gateway, LIG) device. However, in a network architecture of a distributed gateway deployment, a distributed gateway device can directly offload a local service to a local application server. Therefore, if to-be-intercepted user equipment uses a local offloading function, local service data of the user equipment may be offloaded to the local application server at the distributed gateway device. However, in this case, a gateway device deployed in the provincial backbone network cannot perceive the service data offloaded at the distributed gateway device, and further cannot report the offloaded service data to a lawful interception center through a lawful interception gateway for performing interception.

### SUMMARY

Embodiments of this application provide a lawful interception method, apparatus, and system, so as to resolve a problem that a lawful interception center cannot perform lawful interception on local offloaded service data of user equipment.

To achieve the foregoing objective, the following technical solutions are used in the embodiments of this application.

According to a first aspect, a lawful interception method is provided, including: receiving, by a centralized gateway device, an interception instruction sent by a lawful interception gateway device; sending, by the centralized gateway device, an offloading disabling instruction to a remote gateway device; and receiving, by the centralized gateway device, service data sent by the remote gateway device, and reporting the service data to a lawful interception center. The interception instruction carries an identifier of to-be-intercepted user equipment, and the offloading disabling instruction is used to instruct the remote gateway device to disable a local offloading function of the user equipment. Based on the lawful interception method provided in this application, because in a process of performing lawful interception on the user equipment, the remote gateway device disables the local offloading function of the user equipment, a local offloaded service of the user equipment is sent to the centralized gateway device. In this way, the centralized gateway device can report the local offloaded service of the user equipment to the lawful interception center through the lawful interception gateway, and therefore the lawful interception center can intercept the local offloaded service of the user equipment.

In a possible design, before sending the offloading disabling instruction to the remote gateway device, the centralized gateway device further needs to learn whether the remote gateway device has enabled the local offloading function of the user equipment; and when the remote gateway device has enabled the local offloading function of the user equipment, the centralized gateway device sends the offloading disabling instruction to the remote gateway device. Therefore, when the remote gateway device has not enabled the local offloading function of the user equipment, after receiving the interception instruction, the centralized gateway device does not need to send an offloading disabling instruction to the remote gateway device. In this way, unnecessary signaling can be reduced, and network resources can be saved.

In a possible design, the centralized gateway device determines whether a context of the to-be-intercepted user equipment includes an address of a local application server corresponding to the user equipment. If yes, it is determined that the remote gateway device has enabled the local offloading function of the user equipment. Therefore, the centralized gateway device can determine whether the remote gateway device has enabled the local offloading function of the user equipment based on this determining process.

In a possible design, the interception instruction further carries an identifier of a to-be-intercepted service, and therefore, the offloading disabling instruction sent by the centralized gateway device to a remote gateway is further used to instruct the remote gateway device to disable a local offloading function of the service of the user equipment. Therefore, a specific service of specific user equipment can be intercepted, so that an amount of transmitted data between gateway devices is reduced, and interception efficiency is improved.

In a possible design, after the centralized gateway device sends the offloading disabling instruction to the remote gateway device, if the centralized gateway device receives the interception stop instruction sent by the lawful interception gateway device, the centralized gateway device sends an offloading enabling instruction to the remote gateway device, where the interception stop instruction is used to instruct the centralized gateway device to stop reporting the service data of the user equipment, and the offloading enabling instruction is used to instruct the remote gateway device to enable the local offloading function of the user equipment. Therefore, after lawful interception ends, the remote gateway device can re-enable the local offloading function. In this way, the user equipment can quickly access the local offloaded service.

In a possible design, in a process of intercepting the user equipment, if the centralized gateway device learns that the user equipment is handed over to another remote gateway device, the centralized gateway device skips activating the local offloading function of the user equipment on the remote gateway device to which the user equipment is handed over. Therefore, it can be ensured that the process of performing lawful interception on the user equipment is not interrupted by a handover of the user equipment to another remote gateway device.

According to a second aspect, a lawful interception method is provided, including: sending, by a remote gateway device after receiving an offloading disabling instruction sent by a centralized gateway device, service data of user equipment to the centralized gateway device. The offloading disabling instruction carries an identifier of the to-be-intercepted user equipment, and is used to instruct the remote gateway device to disable a local offloading function of the user equipment. The service data includes local offloaded service data and non-local offloaded service data. Therefore, after receiving all service data of the user equipment, the centralized gateway device can upload all the service data of the user equipment to a lawful interception center, to help intercept the user equipment.

In a possible design, the offloading disabling instruction further carries an identifier of a to-be-intercepted service, and the remote gateway device can disable the local offloading function of the service of the user equipment. Therefore, the remote gateway device can disable a local offloading function of a specific service of the user equipment.

In a possible design, after the remote gateway device receives the offloading disabling instruction sent by the centralized gateway device, if the remote gateway device receives an offloading enabling instruction sent by the centralized gateway device, the remote gateway device sends the local offloaded service data of the user equipment to a local application server, and sends the non-local offloaded service data to the centralized gateway device. The offloading enabling instruction is used to instruct the remote gateway device to enable the local offloading function of the user equipment. Therefore, after lawful interception ends, the remote gateway device can proceed to enable the local offloading function of the user equipment, and further enable the user equipment to quickly access a local offloaded service.

According to a third aspect, a centralized gateway device is provided, including: a receiving unit, configured to receive an interception instruction sent by a lawful interception gateway device, where the interception instruction carries an identifier of to-be-intercepted user equipment; and a sending unit, configured to send an offloading disabling instruction to a remote gateway device after the interception instruction is received, where the offloading disabling instruction is used to instruct the remote gateway device to disable a local offloading function of the user equipment. The receiving unit is further configured to receive service data of the user equipment sent by the remote gateway device; and the sending unit is further configured to report the service data to the lawful interception gateway device.

In a possible design, the centralized gateway device further includes: a processing unit, configured to learn, based on a context of the user equipment, that the local offloading function of the user equipment is enabled on the remote gateway device.

In a possible design, the processing unit is further configured to: determine whether the context of the user equipment includes an address of a local application server corresponding to the user equipment; and if the context of the user equipment includes the address of the local application server corresponding to the user equipment, determine that the local offloading function of the user equipment is enabled on the remote gateway device.

In a possible design, the interception instruction received by the receiving unit further carries an identifier of a to-be-intercepted service, and the offloading disabling instruction sent by the sending unit is further used to instruct the remote gateway device to disable a local offloading function of the to-be-intercepted service of the user equipment.

In a possible design, the processing unit is further configured to determine, based on the context of the user equipment, the remote gateway device that implements the local offloading function for the user equipment.

In a possible design, the receiving unit is further configured to receive an interception stop instruction sent by the lawful interception gateway device, where the interception stop instruction is used to instruct the centralized gateway device to stop reporting the service data of the user equipment; and the sending unit is further configured to send an offloading enabling instruction to the remote gateway device after the receiving unit receives the interception stop instruction, where the offloading enabling instruction is used to instruct the remote gateway device to enable the local offloading function of the user equipment.

In a possible design, the processing unit is further configured to: in a process of intercepting the user equipment, when learning that the user equipment is handed over to another remote gateway device, skip activating the local offloading function of the user equipment on the remote gateway device to which the user equipment is handed over.

According to a fourth aspect, a remote gateway device is provided, including: a receiving unit, further configured to receive an offloading disabling instruction sent by a centralized gateway device, where the offloading disabling instruction carries an identifier of to-be-intercepted user equipment, used to instruct the remote gateway device to disable a local offloading function of the user equipment; and a sending unit, configured to send service data of the user equipment to the centralized gateway device after the offloading disabling instruction is received, where the service data includes local offloaded service data and non-local offloaded service data.

In a possible design, the offloading disabling instruction further carries an identifier of a to-be-intercepted service, and the offloading disabling instruction is further used to instruct the remote gateway device to disable a local offloading function of the to-be-intercepted service of the user equipment; and the sending unit is further configured to send data of the to-be-intercepted service of the user equipment to the centralized gateway device.

In a possible design, the receiving unit is further configured to receive an offloading enabling instruction sent by the centralized gateway device, where the offloading enabling instruction is used to instruct the remote gateway device to enable the local offloading function of the user equipment; and the sending unit is further configured to: send the local offloaded service data of the user equipment to a local application server after the offloading enabling instruction is received, and send the non-local offloaded service data of the user equipment to the centralized gateway device.

According to a fifth aspect, a centralized gateway device is provided, including: a processor and a communications interface. The processor is configured to receive, through the communications interface, an interception instruction sent by a lawful interception gateway device, where the interception instruction carries an identifier of to-be-intercepted user equipment; the processor is further configured to send an offloading disabling instruction to a remote gateway device through the communications interface, where the offloading disabling instruction is used to instruct the remote gateway device to disable a local offloading function of the user equipment; and the processor is further configured to receive, through the communications interface, service data of the user equipment sent by the remote gateway device, and report the service data to the lawful interception gateway device.

In a possible design, the processor is further configured to learn, based on a context of the user equipment, that the local offloading function of the user equipment is enabled on the remote gateway device.

In a possible design, the processor is further configured to determine whether the context of the user equipment includes an address of a local application server corresponding to the user equipment; and if yes, the centralized gateway device determines that the local offloading function of the user equipment is enabled on the remote gateway device.

In a possible design, the interception instruction further carries an identifier of a to-be-intercepted service, and the offloading disabling instruction is further used to instruct the remote gateway device to disable a local offloading function of the to-be-intercepted service of the user equipment. In a possible design, the processor is further configured to determine, based on the context of the user equipment, the remote gateway device that implements the local offloading function for the user equipment.

In a possible design, the processor is further configured to receive, through the communications interface, an interception stop instruction sent by the lawful interception gateway device, where the interception stop instruction is used to instruct the centralized gateway device to stop reporting the service data of the user equipment; and the processor is further configured to send an offloading enabling instruction to the remote gateway device through the communications interface, where the offloading enabling instruction is used to instruct the remote gateway device to enable the local offloading function of the user equipment.

In a possible design, the processor is further configured to: in a process of intercepting the user equipment, if learning that the user equipment is handed over to another remote gateway device, skip activating the local offloading function of the user equipment on the remote gateway device to which the user equipment is handed over.

According to a sixth aspect, a remote gateway device is provided, including: a processor and a communications interface. The processor is configured to receive, through the communications interface, an offloading disabling instruction sent by a centralized gateway device, where the offloading disabling instruction carries an identifier of to-be-intercepted user equipment, and the offloading disabling instruction is used to instruct the remote gateway device to disable a local offloading function of the user equipment; and the processor is further configured to send service data of the user equipment to the centralized gateway device, where the service data includes local offloaded service data and non-local offloaded service data.

In a possible design, the offloading disabling instruction further carries an identifier of a to-be-intercepted service, and the offloading disabling instruction is further used to instruct the remote gateway device to disable a local offloading function of the to-be-intercepted service of the user equipment; and the processor is further configured to send data of the to-be-intercepted service of the user equipment to the centralized gateway device.

In a possible design, the processor is further configured to receive, through the communications interface, an offloading enabling instruction sent by the centralized gateway device, where the offloading enabling instruction is used to instruct the remote gateway device to enable the local offloading function of the user equipment; and the processor is further configured to send the local offloaded service data of the user equipment to a local application server through the communications interface, and send the non-local offloaded service data of the user equipment to the centralized gateway device.

According to a seventh aspect, a lawful interception system is provided, including the centralized gateway device having any feature of the fifth aspect and the remote gateway device having any feature of the sixth aspect.

According to an eighth aspect, a computer-readable storage medium is provided, where the computer-readable storage medium stores an instruction, and when the instruction is run on a computer, the computer is enabled to perform the method in the foregoing aspects.

According to a ninth aspect, a computer program product including an instruction is provided, and when the computer program product is run on a computer, the computer is enabled to perform the method in the foregoing aspects.

### BRIEF DESCRIPTION OF DRAWINGS

FIG. 1 is a schematic diagram of an EPS network architecture according to an embodiment of this application;
FIG. 2 is a schematic diagram of another EPS network architecture according to an embodiment of this application;
FIG. 3 is a schematic flowchart 1 of a lawful interception method according to an embodiment of this application;
FIG. 4 is a schematic flowchart 2 of a lawful interception method according to an embodiment of this application;
FIG. 5 is a schematic flowchart 3 of a lawful interception method according to an embodiment of this application;
FIG. 6 is a schematic flowchart 4 of a lawful interception method according to an embodiment of this application;
FIG. 7 is a schematic flowchart 5 of a lawful interception method according to an embodiment of this application;
FIG. 8 is a schematic structural diagram 1 of a centralized gateway device according to an embodiment of this application;
FIG. 9 is a schematic structural diagram 2 of a centralized gateway device according to an embodiment of this application;
FIG. 10 is a schematic structural diagram 1 of a remote gateway device according to an embodiment of this application;
FIG. 11 is a schematic structural diagram 3 of a centralized gateway device according to an embodiment of this application;
FIG. 12 is a schematic structural diagram 2 of a remote gateway device according to an embodiment of this application;
FIG. 13 is a schematic structural diagram 4 of a centralized gateway device according to an embodiment of this application;
FIG. 14 is a schematic structural diagram 3 of a remote gateway device according to an embodiment of this application; and
FIG. 15 is a schematic structural diagram of a lawful interception system according to an embodiment of this application.

### DESCRIPTION OF EMBODIMENTS

Network architectures and service scenarios described in embodiments of this application are intended to more clearly describe the technical solutions in the embodiments of this application, but are not intended to limit the technical solutions provided in the embodiments of this application. A person of ordinary skill in the art may know that as the network architectures evolve and a new service scenario emerges, the technical solutions provided in the embodiments of this application are also applicable to a similar technical problem.

The technical solutions of the embodiments of this application are applicable to a scenario of an access mode defined by the 3rd generation partnership project (3rd Generation Partnership Project, 3GPP), and are also applicable to a scenario of a non-3GPP access mode. The embodiments of this application are described by using an example of an EPS network architecture in a scenario of a 3GPP access mode.

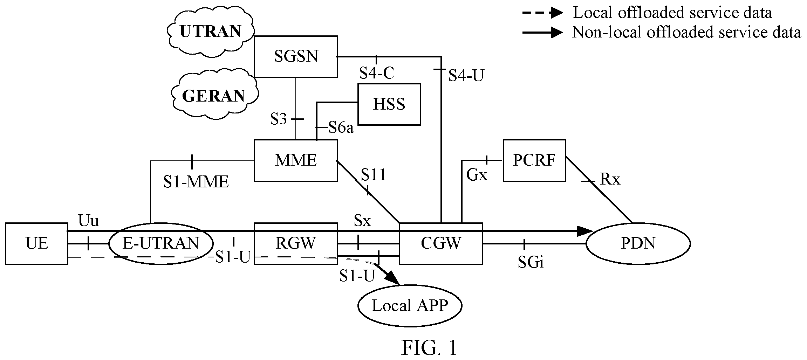

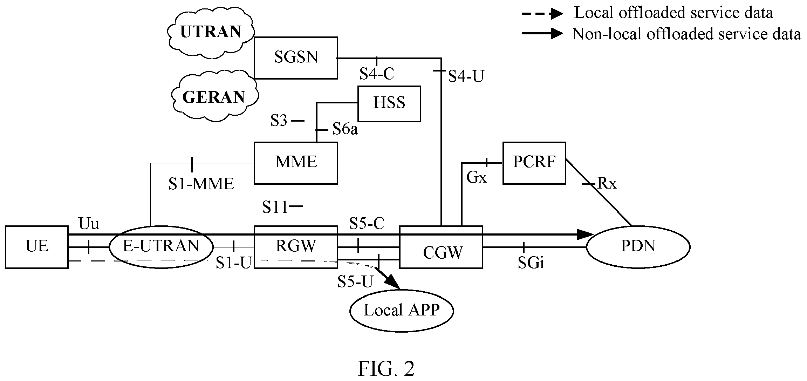

The technical solutions of the embodiments of this application are applicable to an evolved packet system (Evolved Packet System, EPS) network architecture having a distributed gateway deployment. The distributed gateway deployment means that a deployment position of a gateway is distributed. For example, the gateway is deployed at a position closer to user equipment. For example, the gateway may be deployed in a distributed manner together with an evolved NodeB (evolved NodeB, eNB). In this way, the UE can quickly access a local application server through the distributed gateway, so that the UE can quickly access a service on the local application server. FIG. 1 is a schematic diagram of an EPS network architecture having a distributed gateway deployment according to an embodiment of this application. The network architecture includes a remote gateway (Remote Gateway, RGW) and a centralized gateway (Centralized Gateway, CGW). The RGW is a distributed remote gateway node, and is mainly responsible for local service offloading of user equipment. The CGW is a centralized gateway node, and is mainly responsible for mobility management, a session management function, and an external interface function such as a function of a charging interface or a lawful interception interface. The CGW performs control management on the RGW through an SX interface, and receives, through an S1-U interface, user plane data sent by the RGW. An interface protocol, such as the general packet radio service (General Packet Radio Service, GPRS) tunneling protocol (GPRS Tunneling Protocol, GTP), between an SGW and a PGW in an existing EPS network architecture may be applied to the SX interface and the S1-U interface, or another interface protocol or a newly defined protocol may be applied to the SX interface and the S1-U interface. This is not limited in this embodiment of this application. In the network architecture, in addition to the introduced CGW and RGW and the SX interface and the S1-U interface between the introduced CGW and RGW, a network element and an interface of the existing EPS network architecture may be used as another network element and another interface. In the network architecture shown in FIG. 1, control plane signaling in an uplink direction passes from the UE through an evolved universal terrestrial radio access network (Evolved Universal Terrestrial Radio Access Network, E-UTRAN), an MME, the CGW, and a policy and charging rules function (Policy and Charging Rules Function, PCRF) entity and arrives at a public data network (Public Data Network, PDN); and user plane data of a local offloaded service in the uplink direction passes from the UE through the E-UTRAN and the RGW and then, directly arrives at the local application server, and user plane data of a non-local offloaded service passes from the UE through the E-UTRAN, the RGW, and the CGW and arrives at the PDN. FIG. 2 is a schematic diagram of another EPS network architecture of gateway distribution according to an embodiment of this application. The network architecture includes an RGW and a CGW. An MME selects the RGW for user equipment. The RGW is a remote gateway node deployed in a distributed manner, and is integrated with functions of an SGW and some functions of a PGW (for example, routing and forwarding to a local application server) in an existing EPS network architecture. The CGW is a centralized gateway node, undertakes some functions of a PGW, and is mainly responsible for mobility management, a session management function, and an external interface function such as a function of a charging interface or a lawful interception interface. The CGW performs control plane signaling interworking with the RGW through an S5-C interface, and performs user plane data exchange with the RGW through an S5-U interface. An interface protocol between the SGW and the PGW in the existing EPS network architecture may be applied to the S5-C interface and the S5-U interface. An interface protocol between the SGW and the MME in the existing EPS network architecture may be applied to an S 11 interface, or another interface protocol or a newly defined protocol may be applied to all of S5-C interface, the S5-U interface, and the S11 interface. This is not limited in this embodiment of this application. In the network architecture, in addition to the introduced CGW and RGW and related interfaces, a network element and an interface of the existing EPS network architecture may be used as another network element and another interface. In the network architecture shown in FIG. 2, control plane signaling in an uplink direction passes from the UE through an E-UTRAN, the MME, the RGW, the CGW, and a PCRF entity and arrives at a PDN; and user plane data of a local offloaded service in the uplink direction passes from the UE through the E-UTRAN and the RGW and directly arrives at the local application server, and a transmission path of user plane data of a non-local offloaded service passes from the UE through the E-UTRAN, the RGW, and the CGW and arrives at the PDN.

When needing to perform lawful interception on the EPS network shown in FIG. 1 or FIG. 2, a lawful interception system further includes: a lawful interception center and an LIG. The lawful interception center mainly gives an instruction of starting or stopping interception, and performs lawful interception on reported data. The LIG mainly forwards instruction given by the lawful interception center, and reports service data of the user equipment to the interception center. The lawful interception center is connected to the LIG, or the lawful interception center and the LIG are deployed together, and the LIG accesses the EPS network through the CGW. There are three interfaces between the LIG and the CGW. The three interfaces are respectively an X1 interface, an X2 interface, and an X3 interface. This is not limited in this embodiment of this application.

To make the embodiments of this application be better understood, application scenarios of the embodiments of this application are briefly introduced as follows:
Generally, an application provider may deploy different application servers based on different service requirements. For example, a service requiring a low latency such as a video on-live or an AR (Augmented Reality, augmented reality) game, is deployed on a local application server closer to a position of the user equipment. In this way, this type of service may be specified as a local offloaded service. When accessing this type of service, the user equipment directly accesses the local application server through a remote gateway device, to implement local offloading of this type of service. In this way, a path through which the user equipment accesses the local offloaded service becomes shorter, a transmission rate is improved, and further, it is beneficial to improving user experience. However, a service having a low requirement on a latency, such as an e-mail service or a web page browsing service, is deployed on a non-local application server farther from the position of the user equipment. In this way, this type of service may be specified as a non-local offloaded service. When the user equipment accesses this type of service, the remote gateway device accesses the PDN through a centralized gateway device. In this application scenario, when performing lawful interception on the user equipment, a lawful interception center cannot obtain the local offloaded service of the user equipment, and therefore, cannot perform lawful interception on local offloaded service data of the user equipment.

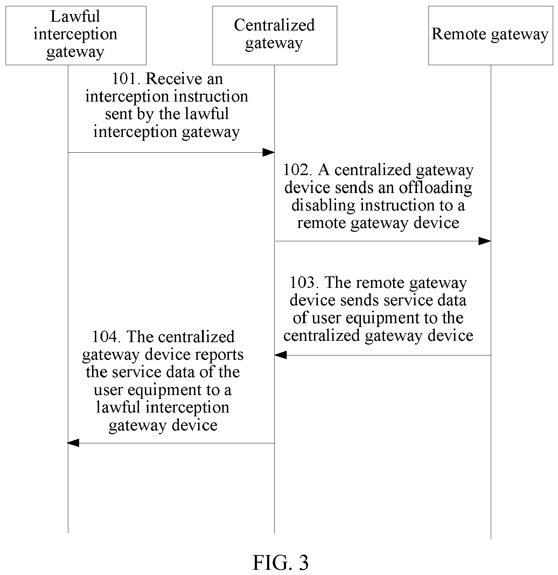

To resolve a problem that lawful interception cannot be performed on the local offloaded service data that is on the remote gateway device, an embodiment of this application provides a lawful interception method. The method is applicable to the network shown in FIG. 1 or FIG. 2. As shown in FIG. 3, the method includes the following steps.

101. A centralized gateway device receives an interception instruction sent by a lawful interception gateway device.

The interception instruction carries an identifier of to-be-intercepted user equipment, and the centralized gateway device may determine, based on the identifier, the user equipment needing to be intercepted.

In an example, when needing to perform lawful interception on the user equipment, a lawful interception center may send an interception instruction to the centralized gateway device through a lawful interception gateway, the centralized gateway device uploads service data of the user equipment to the lawful interception center through the lawful interception gateway, and the lawful interception center performs interception on the user equipment.

102. The centralized gateway device sends an offloading disabling instruction to the remote gateway device.

The offloading disabling instruction carries the identifier of the to-be-intercepted user equipment, and may be used to instruct the remote gateway device to disable a local offloading function of the to-be-intercepted user equipment. Optionally, a new message may be added and used to instruct the remote gateway device to enable or disable the offloading function, or an Echo Request message in the prior art may be extended, for example, a new instruction information element is added to the Echo Request message, to instruct the remote gateway device to enable or disable the offloading function. Specifically, it may be customized that: when a value of the new instruction information element is zero, the offloading function is enabled; otherwise, the offloading function is disabled. A specific implementation of the offloading enabling instruction or the offloading disabling instruction not limited in this embodiment of this application.

In an example, if the local offloading function of the user equipment is enabled on the remote gateway device, a local offloaded service of the user equipment may be directly offloaded to a local application server at a position of the remote gateway device without passing through the centralized gateway device. In this case, the centralized gateway device cannot report data of the local offloaded service of the to-be-intercepted user, and the lawful interception center cannot intercept the data of the local offloaded service of the user equipment. Therefore, to intercept the data of the local offloaded service of the user equipment, the centralized gateway device needs to send the offloading disabling instruction to the remote gateway device, and after the remote gateway device disables the local offloading function based on the instruction, the remote gateway device sends the local offloaded service data of the user equipment to the PDN through the centralized gateway device. In this way, the centralized gateway device can report the local offloading data of the user equipment to the lawful interception center, and the lawful interception center can intercept the data of the local offloaded service of the user equipment.

Optionally, before performing this step, the centralized gateway device needs to first determine the remote gateway device that serves the user equipment. Specifically, when the centralized gateway device is applied to the system architecture shown in FIG. 1, a context of the centralized gateway device itself includes an identifier of the remote gateway device, and therefore, the remote gateway device may be directly determined based on the context. When the centralized gateway device is applied to the system architecture shown in FIG. 2, the centralized gateway device obtains a context of the user equipment during an attachment procedure, and the context includes the identifier of the remote gateway device that serves the user equipment, so that the remote gateway device may be determined based on the context. For a specific process, refer to detailed descriptions below.

103. The remote gateway device sends service data of the user equipment to the centralized gateway device.

The service data includes local offloaded service data and non-local offloaded service data.

In an example, after receiving the offloading disabling instruction sent by the centralized gateway device, the remote gateway device disables the local offloading function of the user equipment. In this case, after receiving the service data of the user equipment, the remote gateway device forwards all the service data to the centralized gateway device. The centralized gateway device reports all the service data of the user equipment to the lawful interception center through the lawful interception gateway, and the lawful interception center can intercept all the service data of the user equipment.

104. The centralized gateway device reports the service data of the user equipment to the lawful interception gateway device.

This embodiment of this application provides a lawful interception method, and after receiving the interception instruction sent by the lawful interception center, the centralized gateway device sends the offloading disabling instruction to the remote gateway device, and instructs the remote gateway device to disable the local offloading function. The centralized gateway device reports the received service data sent by the remote gateway device to the lawful interception center. Compared with the prior art that the lawful interception center cannot intercept the local offloaded service of the to-be-intercepted user equipment, in this embodiment of this application, the local offloading function of the user equipment on the remote gateway device is disabled, so that the centralized gateway device can obtain the local offloaded service data of the user equipment. In this way, the centralized gateway device can report the local offloaded service data of the user equipment to the lawful interception center, and further, the lawful interception center can intercept the local offloaded service of the user equipment.

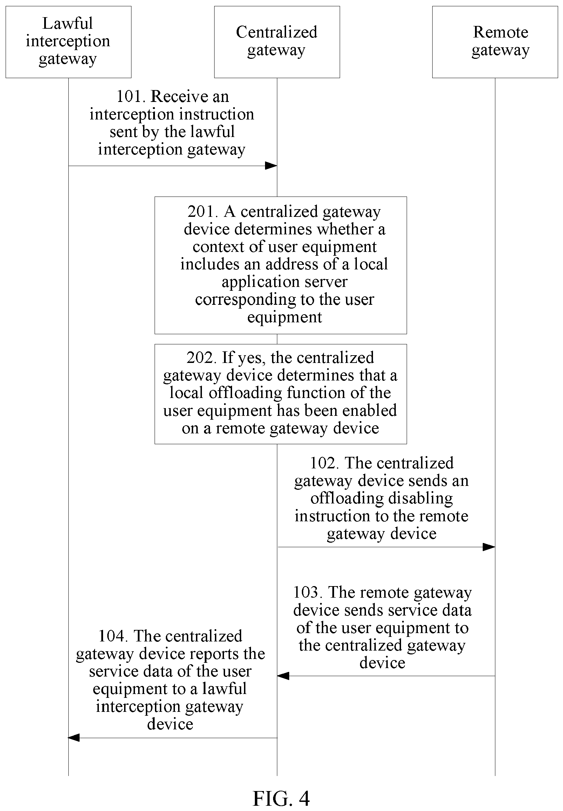

During actual application, this application can be applied to a scenario in which all service data of to-be-intercepted user equipment is intercepted. In this case, the interception instruction sent by the lawful interception center may carry only an identifier of the to-be-intercepted user equipment, to intercept all the service data of the user equipment. It is considered that in some scenarios, only particular service data of the user equipment needs to be intercepted. In this case, in addition to the identifier of the to-be-intercepted user equipment, the interception instruction sent by the lawful interception center to the centralized gateway device further carries an identifier of a to-be-intercepted service. Correspondingly, the offloading disabling instruction sent by the centralized gateway device to the remote gateway device also carries the identifier of the to-be-intercepted service. In this case, the remote gateway device may disable a local offloading function of the user equipment for the to-be-intercepted service based on the identifier of the to-be-intercepted user equipment and the identifier of the to-be-intercepted service in the offloading disabling instruction. In this way, a specific service of specific user equipment can be intercepted, so that a data transmission amount between gateway devices is reduced, and interception efficiency is improved. Optionally, before sending the offloading disabling instruction to the remote gateway device, the centralized gateway device further needs to learn whether the remote gateway device has enabled the local offloading function for the user equipment. Therefore, based on the method shown in FIG. 3, the embodiments of this application further provide a lawful interception method. As shown in FIG. 4, before step 102, the method further includes the step of learning, by the centralized gateway device based on a context of the user equipment, that the local offloading function of the user equipment is enabled on the remote gateway device, and this step specifically includes:
201. The centralized gateway device determines whether the context of the user equipment includes an address of a local application server corresponding to the user equipment.
202. If yes, the centralized gateway device determines that the local offloading function of the user equipment is enabled on the remote gateway device.

The context includes an identifier of each service having an offloading function of the user equipment. Uniform resource locators (Uniform Resource Locator, URL) corresponding to service data having an offloading function may be obtained one by one based on identifiers of services having an offloading function. In addition, whether these URLs include a URL of the local application server is further determined. If these URLs include the URL of the local application server, the centralized gateway device can determine that the user equipment has enabled the local offloading function on the remote gateway device.

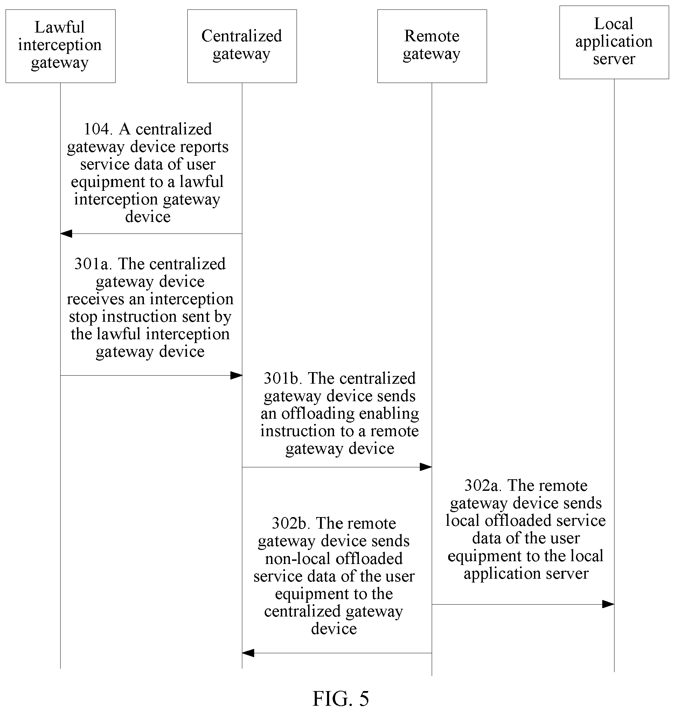

Optionally, before performing step 201, the centralized gateway device first determines whether a local offloading policy is configured for the to-be-intercepted user equipment. If the local offloading policy is configured for the user equipment, it indicates that the remote gateway device has a capability of performing local offloading on the user equipment. In this case, whether the remote gateway device has enabled the local offloading function can be further learned through the foregoing step 201 and step 202. If the remote gateway device does not configure the local offloading policy for the user equipment, it indicates that the remote gateway device does not have the capability of performing local offloading on the user equipment. The local offloading policy may be locally configured by the remote gateway device for the user equipment, or may be obtained through the centralized gateway device from a PCRF. In addition, in the local offloading policy, a specific identifier may be specified and used to represent whether the user equipment can perform local offloading. The local offloading policy may be further included in the context of the user equipment, and the centralized gateway device can determine whether the remote gateway device has a function of enabling local offloading based on the context of the user equipment. An implementation of the local offloading policy is not limited in this embodiment of this application. To enable the remote gateway device to re-enable the local offloading function of the user equipment after the lawful interception ends, the remote gateway device may store the local offloading policy of the user equipment after receiving the offloading disabling instruction. Therefore, based on the method shown in FIG. 3, as shown in FIG. 5, the embodiments of this application further provide a lawful interception method. After step 104, the method further includes the following steps.

301. If the centralized gateway device receives an interception stop instruction sent by the lawful interception gateway device, the centralized gateway device sends the offloading enabling instruction to the remote gateway device.

The interception stop instruction is used to instruct the centralized gateway device to stop reporting the service data of the user equipment, and the offloading enabling instruction is used to instruct the remote gateway device to enable the local offloading function of the user equipment.

In FIG. 5, processes in step 301 are shown by using 301a and 301b respectively.

302. The remote gateway device receives the offloading enabling instruction sent by the centralized gateway device, then sends the local offloaded service data of the user equipment to the local application server, and sends the non-local offloaded service data of the user equipment to the centralized gateway device.

The offloading enabling instruction is used to instruct the remote gateway device to enable the local offloading function of the user equipment.

In an example, after lawful interception performed by the lawful interception center on the user equipment ends, the lawful interception center may send the interception stop instruction to the centralized gateway device through the lawful interception gateway device. After receiving the interception stop instruction, the centralized gateway device sends the offloading enabling instruction to the remote gateway device, to instruct the remote gateway device to enable the local offloading function for the user equipment. After receiving the offloading enabling instruction sent by the centralized gateway device, the remote gateway device re-enables the local offloading function of the user equipment based on a pre-stored local offloading policy.

In FIG. 5, processes in step 302 are shown by using 302a and 302b. Sequences of step 302a and step 302b are not limited.

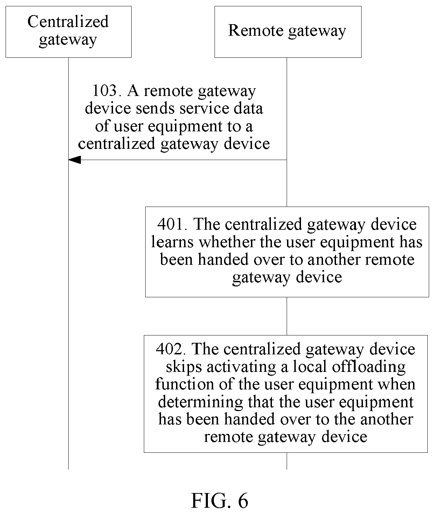

Further, based on the method shown in FIG. 3, in consideration of a case in which a position of the user equipment may change in a process of performing lawful interception on the user equipment, resulting in that an MME hands the user equipment over to another remote gateway device, to ensure that the process of performing lawful interception on the user equipment is not interrupted, as shown in FIG. 6, the embodiments of this application further provide a lawful interception method. After step 103, the method further includes:
401. The centralized gateway device learns that the user equipment is handed over to another remote gateway device.

In an example, if the position of the intercepted user equipment changes, it may cause the MME to select a new remote gateway device to serve the user equipment. In this case, the MME may send a handover message to the centralized gateway device, and the centralized gateway device may determine, based on the handover message, that the user equipment is handed over to another remote gateway device.

402. The centralized gateway device skips activating the local offloading function of the user equipment when determining that the user equipment is handed over to the remote gateway device. In an example, in the prior art, after the MME selects a new remote gateway device for the user equipment, the user equipment may re-perform the attachment procedure and activate the local offloading function on the remote gateway device to which the user equipment is handed over. However, in this embodiment of this application, because the user equipment is user equipment on which lawful interception is performed, after the user equipment completes the attachment procedure on the remote gateway device to which the user equipment is handed over, the centralized gateway device does not activate the local offloading function of the user equipment. In this way, the centralized gateway device can obtain all the service data of the user equipment and report the service data to the lawful interception gateway.

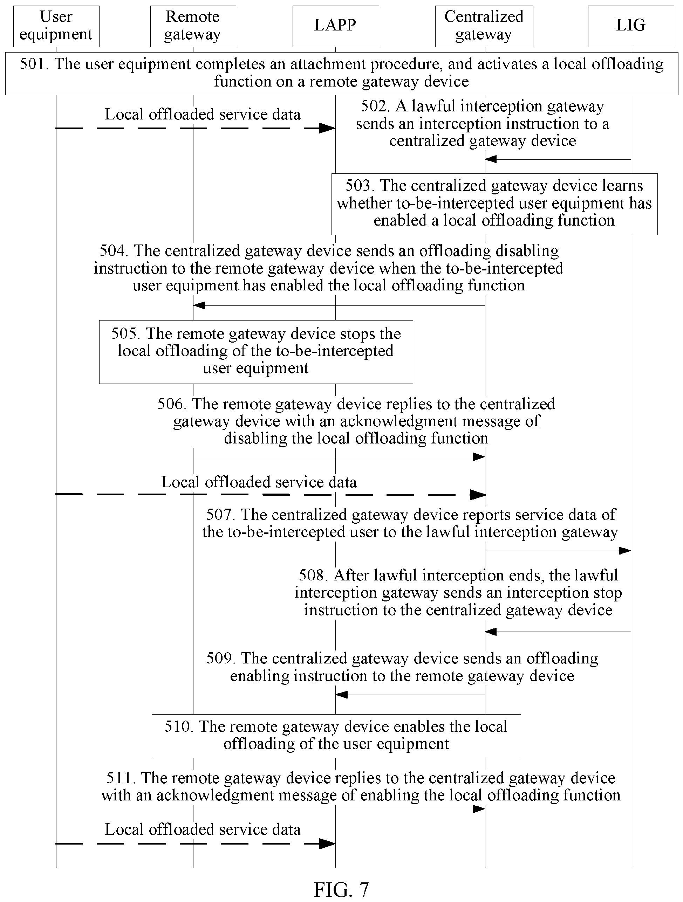

With reference to an actual application scenario of this application, the embodiments of this application further provide a lawful interception method. As shown in FIG. 7, the method includes: 501. User equipment completes an attachment procedure, and activates a local offloading function on a remote gateway device.

In an example, the user equipment obtains a network service permission after completing the attachment procedure, and activates the local offloading function.

Specifically, in the attachment procedure, the MME determines, based on position information of the user equipment or service information requested by the user equipment, a remote gateway device that serves the user equipment. In addition, the MME further determines, based on the service information requested by the user equipment, a centralized gateway device that serves the user equipment. After determining the remote gateway device and the centralized gateway device, the MME sends address information of the remote gateway device and the centralized gateway device by using session creation request signaling to a related network element device such as a PCRF device. After learning of an address of the centralized gateway device that serves the user equipment, the PCRF sends a local offloading policy configured for the user equipment to the centralized gateway device. The centralized gateway device forwards the local offloading policy to the remote gateway device, and instructs the remote gateway to enable the local offloading function and to mark, in a context of the user equipment, information about enabling the local offloading function by the remote gateway device. In this case, a local offloaded service of the user equipment is offloaded at the remote gateway device to a local application server, and a non-local offloaded service is sent a PDN network through the centralized gateway device.

502. A lawful interception gateway sends an interception instruction to the centralized gateway device.

503. The centralized gateway device learns whether to-be-intercepted user equipment has enabled a local offloading function.

504. The centralized gateway device sends an offloading disabling instruction to the remote gateway device when the to-be-intercepted user equipment has enabled the local offloading function.

For a specific implementation process of step 502 to step 504, refer to step 101 and step 102. Details are not described herein again.

505. The remote gateway device stops local offloading of the to-be-intercepted user equipment.

In an example, after the remote gateway device stops local offloading of the to-be-intercepted user equipment, the remote gateway device sends the local offloaded service of the to-be-intercepted user equipment to the centralized gateway device, and the centralized gateway device sends the local offloaded service to the PDN network.

506. The remote gateway device replies to the centralized gateway device with an acknowledgment message of disabling the local offloading function.

In an example, a newly added message may be used as the acknowledgment message with which the remote gateway device replies, or the acknowledgment message may be obtained by extending an Echo Response message in the prior art. This is not limited in this embodiment of this application.

507. The centralized gateway device reports service data of the to-be-intercepted user equipment to the lawful interception gateway.

In an example, the centralized gateway device reports the service data of the to-be-intercepted user equipment to the lawful interception gateway. In this case, the service data includes local offloaded service data and non-local offloaded service data, and is sent by a lawful interception gateway device to a lawful interception center, so that the service data of the user equipment is intercepted. In an example, if in a process in which lawful interception is performed on the user equipment, the centralized gateway device learns that the user equipment is handed over to another remote gateway device, the remote gateway device to which the user equipment is handed over may be controlled to skip activating the local offloading function of the user equipment, to ensure that the process of lawful interception is not interrupted.

508. After lawful interception ends, the lawful interception gateway sends an interception stop instruction to the centralized gateway device.

509. The centralized gateway device sends an offloading enabling instruction to the remote gateway device.

510. The remote gateway device performs local offloading of the user equipment.

For a specific implementation process of step 508 to step 510, refer to that of step 201 and step 202. Details are not described herein again.

511. The remote gateway device replies to the centralized gateway device with an acknowledgment message of enabling the local offloading function.

In an example, a newly added message may be used as the acknowledgment message with which the remote gateway device replies, or the acknowledgment message may be obtained by extending an Echo Response message in the prior art. This is not limited in this embodiment of this application.

The foregoing mainly describes the solutions provided in the embodiments of this application from the perspective of interaction between network elements. It may be understood that, to implement the foregoing functions, the network elements, for example, the centralized gateway device and the remote gateway device, include corresponding hardware structures and/or software modules configured to execute the functions. A person skilled in the art should be easily aware that, the units and algorithm steps in the examples described with reference to the embodiments disclosed in this specification may be implemented by hardware or a combination of hardware and computer software. Whether a function is implemented by hardware or in a manner of driving hardware by a computer software depends on a particular application and a design constraint of the technical solution. A person skilled in the art may use different methods to implement the described functions for each particular application, but it should not be considered that the implementation goes beyond the scope of the present invention.

In the embodiments of this application, function module division may be performed on the centralized gateway device and the remote gateway device based on the foregoing method examples. For example, the function modules may be divided corresponding to the functions, or two or more of the functions may be integrated in one processing module. The integrated module may be implemented in a form of hardware, or may be implemented in a form of a function module of software. It should be noted that module division in the embodiments of this application is an example and is merely logical function division. During actual implementation, there may be another division manner.

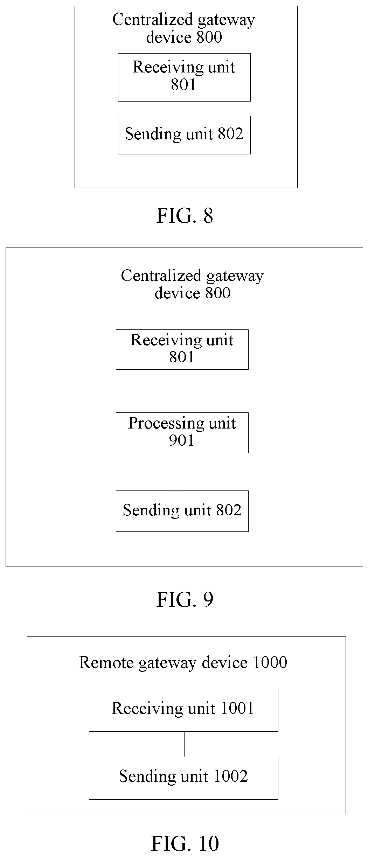

If function modules are divided in correspondence to respective functions, FIG. 8 is a possible schematic structural diagram of the centralized gateway device in the foregoing embodiments. A centralized gateway device 800 includes: a receiving unit 801 and a sending unit 802. The receiving unit 801 is configured to support the centralized gateway device in performing the process 101 in FIG. 3, and the process 301a in FIG. 5; and the sending unit 802 is configured to support the centralized gateway device in performing the processes 102 and 104 in FIG. 3, the process 202 in FIG. 4, the process 301b in FIG. 5, and the process 502, the process 504, and the processes 507 to 509 in FIG. 7. All related content of each step in the foregoing method embodiments may be cited in function descriptions of a corresponding function module. Details are not described herein again.

Further, as shown in FIG. 9, the centralized gateway device 800 further includes a processing unit 901. The processing unit 901 is configured to support the centralized gateway device in performing the processes 201 and 202 in FIG. 4, the processes 401 and 402 in FIG. 6, and the processes 501 and 503 in FIG. 7. All related content of each step in the foregoing method embodiments may be cited in function descriptions of a corresponding function module. Details are not described herein again.

FIG. 10 is a possible schematic structural diagram of the remote gateway device in the foregoing embodiments, and a remote gateway device 1000 includes: a receiving unit 1001 and a sending unit 1002. The receiving unit 1001 is configured to support the remote gateway device in performing the process 302a in FIG. 5. The sending unit 1002 is configured to support the remote gateway device in performing the process 103 in FIG. 3, the processes 302a and 302b in FIG. 5, the processes 505 and 506 in FIG. 7, and the processes 510 and 511 in FIG. 7.

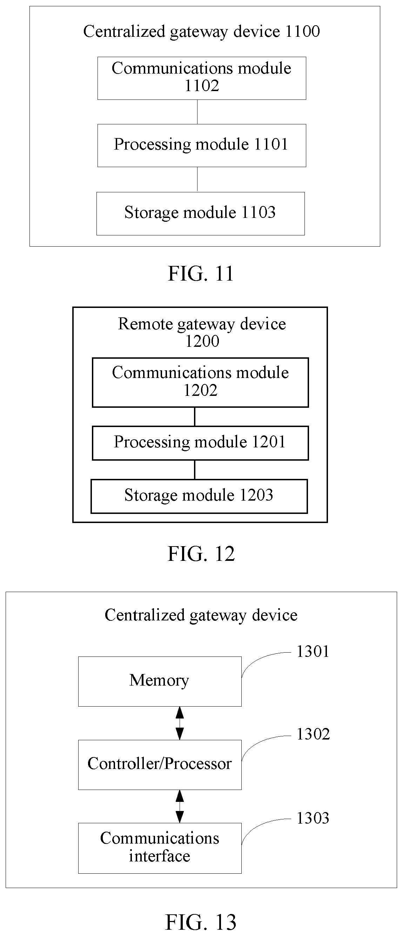

If an integrated unit is used, FIG. 11 is a possible schematic structural diagram of the centralized gateway device in the foregoing embodiments. A centralized gateway device 1100 includes: a processing module 1101 and a communications module 1102. The processing module 1101 is configured to perform control management on an action of the centralized gateway device. For example, the processing module 1101 is configured to support the centralized gateway device in performing the processes 101, 102, and 104 in FIG. 3, the processes 201 and 202 in FIG. 4, the process 301 in FIG. 5, the processes 401 and 402 in FIG. 6, the processes 501, 503, 504, 507, and 509 in FIG. 7, and/or another process used in the technology described in this specification. The communications module 1102 is configured to support the centralized gateway device in communicating with another network entity, for example, communicating with a function module or a network entity shown in FIG. 1 or FIG. 2. The centralized gateway device may further include a storage module 1103, configured to store program code and data of the centralized gateway device.

If an integrated unit is used, FIG. 12 is a possible schematic structural diagram of a remote gateway device in the foregoing embodiments. A remote gateway device 1200 includes: a processing module 1201 and a communications module 1202. The processing module 1201 is configured to perform control management on an action of the remote gateway device. For example, the processing module 1201 is configured to support the remote gateway device in performing the process 103 in FIG. 3, the process 302 in FIG. 5, the processes 505, 506, 510, and 511 in FIG. 7, and/or another process used in the technology described in this specification. The communications module 1202 is configured to support the remote gateway device in communicating with another network entity, for example, communicating with a function module or a network entity shown in FIG. 3, FIG. 4, FIG. 5, FIG. 6, FIG. 7. The remote gateway device may further include a storage module 1203, configured to store program code and data of the remote gateway device.

The processing module 1101/1201 may be a processor or a controller, for example, may be a central processing unit (Central Processing Unit, CPU), a general purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The processing module 1101/1201 can implement or execute various example logical blocks, modules, and circuits that are described with reference to the content disclosed in the present invention. Alternatively, the processor may be a combination for implementing a computing function, for example, a combination of one or more microprocessors or a combination of the DSP and a microprocessor, and the like. The communications module 1102/1202 may be a transceiver, a transceiver circuit, a communications interface, or the like. The storage module 1103/1203 may be a memory.

When the processing module 1101 is a processor, the communications module 1102 is a communications interface, and the storage module 1103 is a memory, the centralized gateway device in this embodiment of this application may be the centralized gateway device shown in FIG. 13.

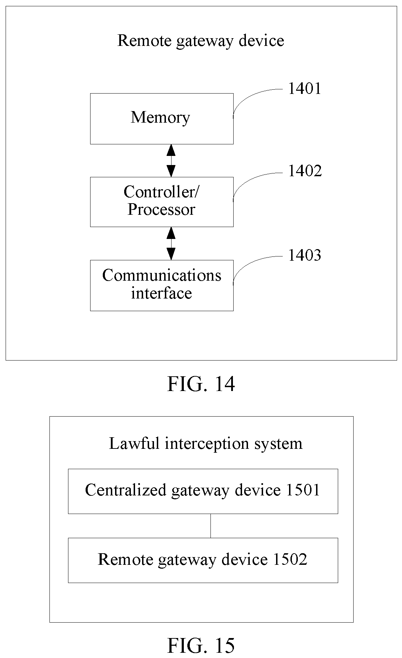

When the processing module 1201 is a processor, the communications module 1202 is a communications interface, and the storage module 1203 is a memory, the remote gateway device in this embodiment of this application may be the remote gateway device shown in FIG. 14.

FIG. 13 is a schematic structural diagram of a centralized gateway device in the foregoing embodiments. The centralized gateway device includes: a controller/processor 1302, configured to perform control management on an action of the centralized gateway device. For example, the controller/processor 1302 is configured to support the centralized gateway device in performing the processes 101, 102, and 104 in FIG. 3, the processes 201 and 202 in FIG. 4, the processes 301a and 301b in FIG. 5, the processes 401 and 402 in FIG. 6, the processes 501 to 504, and 507 to 509 in FIG. 7, and/or another process used for the technology described in the embodiments of the present invention. The memory 1301 is configured to store program code and data of the centralized gateway device. The communications interface 1303 is configured to support the centralized gateway device in communicating with another network entity. For example, the communications interface 1303 is configured to support the centralized gateway device in communicating with each network entity shown in FIG. 1 or FIG. 2.

FIG. 14 is a schematic structural diagram of a remote gateway device in the foregoing embodiments. The remote gateway device includes: a controller/processor 1402, configured to perform control management on an action of the remote gateway device. For example, the controller/processor 1402 is configured to support the remote gateway device in performing the process 103 in FIG. 3, the process 302 in FIG. 5, the processes 505, 506, 510, and 511 in FIG. 7, and/or another process used in the technology described in this specification. The memory 1401 is configured to store program code and data of the remote gateway device. The communications interface 1403 is configured to support the remote gateway device in communicating with another network entity. For example, the communications interface 1403 is configured to support the remote gateway device in communicating with each network entity shown in FIG. 1 or FIG. 2.

The methods or algorithm steps described with reference to the content disclosed in the present invention may be implemented in a hardware manner, or may be implemented in a manner of executing a software instruction by a processor. The software instruction may include a corresponding software module. The software module may be stored in a random access memory (Random Access Memory, RAM), a flash memory, a read-only memory (Read-Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or a storage medium in any other form well-known in the art. A storage medium used as an example is coupled to the processor, so that the processor can read information from the storage medium, and can write information into the storage medium. Certainly, the storage medium may be a component of the processor. The processor and the storage medium may be located in an ASIC. In addition, the ASIC may be located in a core network interface device. Certainly, the processor and the storage medium may exist in the core network interface device as discrete components.

As shown in FIG. 15, the embodiments of this application further provide a lawful interception system, including the foregoing centralized gateway device 1501 and the foregoing remote gateway device 1502.

It may be clearly understood by a person skilled in the art that, for the purpose of convenient and brief description, for a detailed working process of the system, apparatus, and unit, refer to a corresponding process in the method embodiments. Details are not described herein again. When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (ROM, Read-Only Memory), a random access memory (RAM, Random Access Memory), a magnetic disk, or a compact disc.

The foregoing descriptions are merely specific embodiments of this application, but are not intended to limit the protection scope of this application. Any variation or replacement within the technical scope disclosed in this application shall fall within the protection scope of this application.

## Claims

1. A lawful interception method, comprising:
receiving, by a centralized gateway device, an interception instruction sent by a lawful interception gateway device, wherein the interception instruction carries an identifier of to-be-intercepted user equipment;
sending, by the centralized gateway device, an offloading disabling instruction to a remote gateway device, wherein the offloading disabling instruction is used to instruct the remote gateway device to disable a local offloading function of the user equipment; and
receiving, by the centralized gateway device, service data of the user equipment sent by the remote gateway device, and reporting the service data to the lawful interception gateway device.

2. The method according to claim 1, wherein before the sending, by the centralized gateway device, an offloading disabling instruction to a remote gateway device, the method further comprises:
learning, by the centralized gateway device based on a context of the user equipment, that the local offloading function of the user equipment is enabled on the remote gateway device.

3. The method according to claim 2, wherein the learning, by the centralized gateway device based on a context of the user equipment, that the local offloading function of the user equipment is enabled on the remote gateway device comprises:
determining, by the centralized gateway device, whether the context of the user equipment comprises an address of a local application server corresponding to the user equipment; and
if yes, determining, by the centralized gateway device, that the local offloading function of the user equipment is enabled on the remote gateway device.

4. The method according to any one of claims 1 to 3, wherein the interception instruction further carries an identifier of a to-be-intercepted service, and the offloading disabling instruction is further used to instruct the remote gateway device to disable a local offloading function of the to-be-intercepted service of the user equipment.

5. The method according to any one of claims 1 to 4, wherein before the sending, by the centralized gateway device, an offloading disabling instruction to a remote gateway device, the method further comprises:
determining, by the centralized gateway device based on the context of the user equipment, the remote gateway device that implements the local offloading function for the user equipment.

6. The method according to any one of claims 1 to 5, wherein after the sending, by the centralized gateway device, an offloading disabling instruction to a remote gateway device, the method further comprises:
sending, by the centralized gateway device, an offloading enabling instruction to the remote gateway device if the centralized gateway device receives an interception stop instruction sent by the lawful interception gateway device, wherein the interception stop instruction is used to instruct the centralized gateway device to stop reporting the service data of the user equipment, and the offloading enabling instruction is used to instruct the remote gateway device to enable the local offloading function of the user equipment.

7. The method according to any one of claims 1 to 6, wherein in a process of intercepting the user equipment, the method further comprises:
skipping activating, by the centralized gateway device if learning that the user equipment is handed over to another remote gateway device, a local offloading function of the user equipment on the remote gateway device to which the user equipment is handed over.

8. A lawful interception method, comprising:
receiving, by a remote gateway device, an offloading disabling instruction sent by a centralized gateway device, wherein the offloading disabling instruction carries an identifier of to-be-intercepted user equipment, and the offloading disabling instruction is used to instruct the remote gateway device to disable a local offloading function of the user equipment; and
sending, by the remote gateway device, service data of the user equipment to the centralized gateway device, wherein the service data comprises local offloaded service data and non-local offloaded service data.

9. The method according to claim 8, wherein the offloading disabling instruction further carries an identifier of a to-be-intercepted service, and the offloading disabling instruction is further used to instruct the remote gateway device to disable a local offloading function of the to-be-intercepted service of the user equipment; and
the sending, by the remote gateway device, service data of the user equipment to the centralized gateway device comprises: sending, by the remote gateway device, data of the to-be-intercepted service of the user equipment to the centralized gateway device.

10. The method according to claim 8 or 9, wherein after the receiving, by a remote gateway device, an offloading disabling instruction sent by a centralized gateway device, the method further comprises:
if the remote gateway device receives an offloading enabling instruction sent by the centralized gateway device, sending, by the remote gateway device, the local offloaded service data of the user equipment to a local application server, and sending the non-local offloaded service data of the user equipment to the centralized gateway device, wherein the offloading enabling instruction is used to instruct the remote gateway device to enable the local offloading function of the user equipment.

11. A centralized gateway device, comprising:
a receiving unit, configured to receive an interception instruction sent by a lawful interception gateway device, wherein the interception instruction carries an identifier of to-be-intercepted user equipment; and
a sending unit, configured to send an offloading disabling instruction to a remote gateway device after the receiving unit receives the interception instruction, wherein the offloading disabling instruction is used to instruct the remote gateway device to disable a local offloading function of the user equipment, wherein
the receiving unit is further configured to receive service data of the user equipment sent by the remote gateway device; and
the sending unit is further configured to report the service data to the lawful interception gateway device.

12. The centralized gateway device according to claim 11, further comprising a processing unit, configured to learn, based on a context of the user equipment, that the local offloading function of the user equipment is enabled on the remote gateway device.

13. The centralized gateway device according to claim 12, wherein the processing unit is further configured to: determine whether the context of the user equipment comprises an address of a local application server corresponding to the user equipment; and
if yes, determine that the local offloading function of the user equipment is enabled on the remote gateway device.

14. The centralized gateway device according to any one of claims 11 to 13, wherein the interception instruction received by the receiving unit further carries an identifier of a to-be-intercepted service, and the offloading disabling instruction sent by the sending unit is further used to instruct the remote gateway device to disable a local offloading function of the to-be-intercepted service of the user equipment.

15. The centralized gateway device according to any one of claims 11 to 14, wherein the processing unit is further configured to determine, based on the context of the user equipment, the remote gateway device that implements the local offloading function for the user equipment.

16. The centralized gateway device according to any one of claims 11 to 15, wherein the receiving unit is further configured to receive an interception stop instruction sent by the lawful interception gateway device, and the interception stop instruction is used to instruct the centralized gateway device to stop reporting the service data of the user equipment; and
the sending unit is further configured to send an offloading enabling instruction to the remote gateway device after the receiving unit receives the interception stop instruction, wherein the offloading enabling instruction is used to instruct the remote gateway device to enable the local offloading function of the user equipment.

17. The centralized gateway device according to any one of claims 11 to 16, wherein the processing unit is configured to: in a process of intercepting the user equipment, when learning that the user equipment is handed over to another remote gateway device, skip activating the local offloading function of the user equipment on the remote gateway device to which the user equipment is handed over.

18. A remote gateway device, comprising:
a receiving unit, configured to receive an offloading disabling instruction sent by a centralized gateway device, wherein the offloading disabling instruction carries an identifier of to-be-intercepted user equipment, and the offloading disabling instruction is used to instruct the remote gateway device to disable a local offloading function of the user equipment; and
a sending unit, configured to send service data of the user equipment to the centralized gateway device after the receiving unit receives the offloading disabling instruction, wherein the service data comprises local offloaded service data and non-local offloaded service data.

19. The remote gateway device according to claim 18, wherein the offloading disabling instruction further carries an identifier of a to-be-intercepted service, and the offloading disabling instruction is further configured to instruct the remote gateway device to disable a local offloading function of the to-be-intercepted service of the user equipment; and
the sending unit is further configured to send data of the to-be-intercepted service of the user equipment to the centralized gateway device.

20. The remote gateway device according to claim 18 or 19, wherein the receiving unit is further configured to receive an offloading enabling instruction sent by the centralized gateway device, and the offloading enabling instruction is used to instruct the remote gateway device to enable the local offloading function of the user equipment; and
the sending unit is further configured to: after the receiving unit receives the offloading enabling instruction, send the local offloaded service data of the user equipment to a local application server, and send the non-local offloaded service data of the user equipment to the centralized gateway device.

21. A lawful interception system, comprising the centralized gateway device according to any one of claims 11 to 17 and the remote gateway device according to any one of claims 18 to 20.

22. A computer-readable storage medium, wherein the computer-readable storage medium stores an instruction, and when the instruction is run on a computer, the computer is enabled to perform the method according to any one of claims 1 to 7.

23. A computer-readable storage medium, wherein the computer-readable storage medium stores an instruction, and when the instruction is run on a computer, the computer is enabled to perform the method according to any one of claims 8 to 10.

24. A computer program product comprising an instruction, wherein when the computer program product is run on a computer, the computer is enabled to perform the method according to any one of claims 1 to 7.

25. A computer program product comprising an instruction, wherein when the computer program product is run on a computer, the computer is enabled to perform the method according to any one of claims 8 to 10.
